(19) Europäisches Patentamt
European Patent Office
Office européen des brevets

(11) **EP 2 935 943 B1**

(12) **EUROPÄISCHE PATENTSCHRIFT**

(45) Veröffentlichungstag und Bekanntmachung des Hinweises auf die Patenterteilung:
**01.02.2017 Patentblatt 2017/05**

(21) Anmeldenummer: **13814886.1**

(22) Anmeldetag: **18.12.2013**

(51) Int Cl.:
*F16H 55/08* (2006.01)

(86) Internationale Anmeldenummer:
**PCT/EP2013/077182**

(87) Internationale Veröffentlichungsnummer:
**WO 2014/096061 (26.06.2014 Gazette 2014/26)**

(54) **ZAHNRAD UND GETRIEBE MIT EINEM SOLCHEN**

GEAR AND TRANSMISSION COMPRISING SUCH A GEAR

ROUE DENTÉE ET ENGRENAGE COMPRENANT UNE TELLE ROUE DENTÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.12.2012 DE 102012223654**

(43) Veröffentlichungstag der Anmeldung:
**28.10.2015 Patentblatt 2015/44**

(73) Patentinhaber: **Lenze Drives GmbH**
**32699 Extertal (DE)**

(72) Erfinder:
- **GÖTZ, Tino**
  **30974 Wennigsens (DE)**
- **GUHL, Ralf-Torsten**
  **31855 Aerzen (DE)**

(74) Vertreter: **Patentanwälte**
**Ruff, Wilhelm, Beier, Dauster & Partner mbB**
**Kronenstraße 30**
**70174 Stuttgart (DE)**

(56) Entgegenhaltungen:
EP-A1- 2 177 788          EP-A1- 2 532 926
DE-U1-202006 011 877      US-A- 4 858 487

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Zahnrad mit genau zwei Zähnen sowie eine Zahnradpaarung mit einem solchen Zahnrad und ein Getriebe mit einer solchen Zahnradpaarung.

Als Stirnräder ausgebildete Zahnräder sind als Kernkomponente von Zahnradgetrieben allgemein bekannt. Zur Erzielung einer hohen Übersetzung ist es erforderlich, dass Verhältnis zwischen der Zahnzahl zweier miteinander kämmender Zahnräder möglichst groß zu wählen. Um dabei die absolute Zahl der jeweiligen Zähne nicht zu hoch werden zu lassen, ist es sinnvoll, dass Zahnrad mit der geringeren Zahnzahl mit einer möglichst geringen Zahnzahl auszugestalten.

Aus dem Stand der Technik sind Zahnrädern mit nur zwei Zähnen bekannt. Ein solches Zahnrad ergibt sich beispielsweise aus der DE 20 2006 011 877 U1. Diese Druckschrift offenbart die Merkmale des Oberbegriffs des Anspruchs 1. Das dort vorgeschlagene Zahnrad ist in Art eines evolventenverzahnten Zahnrades ausgestaltet, was bei einem Zahnrad mit nur zwei Zähnen bedeutet, dass zwischen den Zähnen jeweils konkave Einbuchtungen vorgesehen sind. Diese Ausgestaltung des Zahnrades führt jedoch zu einer je nach Anwendungsfall nicht ausreichenden Festigkeit im Bereich der konkaven Einbuchtungen.

Aus der EP 2 177 788 A1 ist im Kontext einer Zahnradpaarung ein kleineres Zahnrad bekannt, welches eine Querschnittsfläche aufweist, die einen kreisrunden Umfang hat und relativ zur Achse des kleineren Rades exzentrisch angeordnet ist. Dieses Rad weist den Nachteil einer Unwucht aufgrund der exzentrischen Gestaltung auf, welche zu einer höheren Lagerbelastung führt.

**Aufgabe und Lösung**

Aufgabe der Erfindung ist es, ein Zahnrad mit zwei Zähnen derart auszugestalten, dass dieses die Nachteile des Standes der Technik vermeidet.

Erfindungsgemäß wird dies durch ein Zahnrad mit genau zwei Zähnen erreicht, welches um eine Zahnradachse drehbar ist, wobei in einer Schnittebene, die orthogonal zur Zahnradachse angeordnet ist, das Zahnrad eine Querschnittsfläche aufweist, die in ihrem geometrischen Schwerpunkt von der Zahnradachse geschnitten wird, die im Bereich der beiden Zähne ihre maximale Erstreckung durch den geometrischen Schwerpunkt hindurch aufweist und die in Umfangsrichtung gegenüber der Richtung maximaler Erstreckung versetzt ihre minimale Erstreckung aufweist, und deren Außenkontur über den gesamten Umfang konvex ausgebildet ist.

Ein erfindungsgemäßes Zahnrad hat somit bei einfachster Ausgestaltung die Form eines Zylinders mit ellipsenförmiger Querschnittsfläche. In einer weiteren Ausgestaltung hat das Zahnrad die Form eines Kegels mit ellipsenförmiger Querschnittsfläche. Erheblich ist, dass die Querschnittsfläche des Zahnrades im Bereich des Schwerpunktes durch die Zahnradachse geschnitten wird, wobei hierfür das Zahnrad im genannten Bereich zur form- oder kraftschlüssigen Kupplung mit einer Zahnradwelle vorgesehen sein kann. Eine solche Zahnradwelle kann ggf. auch einstückig mit dem Zahnrad ausgebildet sein. Durch die genannte Anordnung der Zahnradwelle ist das erfindungsgemäße Zahnrad unwuchtfrei.

Die genannte zylindrische Gestalt geht mit einer geraden Verzahnung einher. Eine solche gerade Verzahnung kann dort Verwendung finden, wo das Zahnrad mit mehr als einem Antriebszahnrad im Eingriff steht, wie es beispielsweise im Falle der Planetenräder eines Planetengetriebes der Fall ist. Bei einer kegelförmigen Gestalt ist ebenfalls eine gerade Verzahnung möglich. Eine derartige Verzahnung kann beispielsweise in einem Kegelradgetriebe Verwendung finden. Bevorzugt wird jedoch eine Gestaltung, bei der das Zahnrad schrägverzahnt ist, wobei ein Überdeckungswinkel eines jeden der beiden Zähne mindestens 180° beträgt. Bei einer solchen Schrägverzahnung verlaufen die beiden Zähne des erfindungsgemäßen Zahnrades somit entlang einer Helixspur zumindest um 180° an der Außenseite des Zahnrades, um beim Kämmen mit einem ebenfalls schrägverzahnten Zahnrad permanent im Eingriff mit diesem zu verbleiben.

Der Schrägungswinkel, also der Winkel, der zwischen der Zahnradachse und der helixförmigen Erstreckung eines jeden der beiden Zähne vorgesehen ist, beträgt dabei vorzugsweise zwischen 0° und 65° und insbesondere vorzugsweise zwischen 15° und 50°. Es wird ein kleiner Wert beim Schrägungswinkel angestrebt, um die axiale Kraftkomponente die auf das erfindungsgemäße Zahnrad mit zwei Zähnen wirkt, gering zu halten. Durch eine Pfeilverzahnung kann auch im Falle größerer Schrägungswinkel eine axiale Kraftkomponente verhindert werden.

Die maximale Erstreckung der Querschnittsfläche ist im Bereich der beiden Zähne vorgesehen, worunter zu verstehen ist, dass eine gedachte Verbindungslinie zwischen den beiden einander gegenüberliegenden Zähnen in Richtung der maximalen Erstreckung der Querschnittsfläche ausgerichtet ist. Die Richtung, in der die Querschnittsfläche minimal erstreckt ist, steht vorzugsweise im 90°-Winkel hierzu, wobei dies nicht zwingend erforderlich ist. Durch einen vergleichsweise geringen Faktor zwischen minimaler und maximaler Erstreckung wird eine hohe Stabilität des Zahnrades erreicht, durch die Zahnbruch und anderer Verschleiß gering gehalten werden kann. Um eine größtmögliche Berührfläche zwischen dem erfindungsgemäßen Zahnrad mit zwei Zähnen einerseits und einem dieses antreibende oder von diesem angetriebene zweite Zahnrad zu erzielen, ist jedoch ein vergleichsweise großer Faktor zwischen maximaler und minimaler Erstreckung zweckmäßig. Es hat sich bei der Abwägung als vorteilhaft herausgestellt, wenn der Faktor zwischen 1,25 und 2,25 beträgt. Eine besonders vorteilhafte Ausgestaltung ist gegeben, wenn die maximale Erstreckung der Querschnittsfläche des Zahnrades in etwa oder genau das Doppelte der minimalen Erstreckung beträgt, so dass der Faktor 2 (+/- 10%) beträgt.

Die Querschnittsfläche des Zahnrades weist vorzugsweise eine Formgebung auf, bei der eine Punktsymmetrie bezogen auf die Zahnradachse, insbesondere eine Liniensymmetrie bezogen auf zwei zueinander orthogonale Symmetrieachse gegeben ist. Insbesondere von Vorteil ist eine Querschnittsfläche, deren Außenkonturen die Form einer Ellipse beschreiben. Die Außenkontur kann somit über die Formel

$$x^2 / a^2 + y^2 / b^2 = 1$$

beschrieben werden, wobei die maximale Erstreckung der Querschnittsfläche 2 • a beträgt und wobei die minimale Erstreckung der Querschnittsfläche 2 • b beträgt.

Möglich ist bei gleichen Symmetrieachsen auch eine Ausgestaltung der Querschnittsfläche mit einer Außenkontur, die einer Superellipse entspricht. Diese Außenkontur kann dann mit der Formel

$$\left| x / a \right| n + \left| y / b \right| n = 1$$

beschrieben werden.

Im Falle eines schrägverzahnten Zahnrades ist in der oben bereits genannten Weise ein Überdeckungswinkel von mindestens 180° je Zahn zu wählen, so dass die beiden Zähne gemeinsam einen permanenten Eingriff mit einem zweiten Zahnrad ermöglichen. Von besonderem Vorteil ist es, wenn die Überdeckung geringer als 360° ist, da hierdurch eine kompakte Bauform des erfindungsgemäßen Zahnrades möglich ist.

Die Erfindung betrifft neben dem Zahnrad mit zwei Zähnen selbst auch eine Zahnradanordnung mit mindestens zwei in kämmendem Eingriff befindlichen Zahnrädern, wobei das kleinere der beiden Zahnräder bzw. das kleinste von mehr als zwei Zahnrädern nach oben beschriebener Art mit nur zwei Zähnen ausgebildet ist. Die genannte Zahnradanordnung hat die Eigenschaft, dass die Übersetzung einer jeweiligen Zahnradpaarung drehwinkelunabhängig sein kann/ist, also über die Umdrehung der Zahnräder konstant sein kann/ist. Weiterhin ist es nicht zwingend erforderlich, dass das/die größere/n Zahnräder einen ellipsenförmigen Querschnitt bzw. eine konvexe Außenkontur aufweisen.

Das oder die anderen Zahnräder weisen vorzugsweise eine Zahnzahl von zehn oder mehr Zähnen auf, so dass sich hierdurch mindestens eine Übersetzung von 5 realisieren lässt.

Da eingangs schon beschrieben wurde, dass auf eine Schrägverzahnung verzichtet werden kann, wenn das erfindungsgemäße Zahnrad mit mehr als zwei Antriebsrädern kämmt, wird es als vorteilhaft angesehen, wenn eine solche Anordnung vorgesehen ist, bei der mindestens zwei größere Zahnräder gleichzeitig mit dem erfindungsgemäßen kleinen Zahnrad kämmen. Eine solche Konstellation ist beispielsweise bei einem Planetengetriebe möglich.

Um leichte und wirtschaftliche Zahnradanordnungen zu gestatten, hat sich eine Ausgestaltung als besonders vorteilhaft herausgestellt, bei der das kleinere bzw. das kleinste der Zahnräder aus Metall gefertigt ist, während die damit kämmenden größeren Zahnräder aus Kunststoff gefertigt sind. Da die Belastung der einzelnen Zähne am kleinen Zahnrad erheblich höher ist, ist hier die metallische Ausgestaltung für hohe Laufzeiten von Vorteil. Bei den größeren Zahnrädern ist aufgrund der geringeren Belastung des Einzelzahns eine solche Materialwahl nicht erforderlich, so dass auf günstigeren Kunststoff zurückgegriffen werden kann. Bei Getrieben, bei denen bis 2 kW mechanischer Leistung übertragen werden, ist eine solche Paarung aus Kunststoff und Metall von Vorteil.

Die Erfindung betrifft des Weiteren auch ein Getriebe mit einer Zahnradanordnung beschriebener Art. Hierbei kann es sich insbesondere um ein Planetengetriebe handeln, dessen Sonnenrad durch das Zahnrad mit zwei Zähnen gebildet wird. Weiterhin kann es sich um ein Kegelradgetriebe handeln, dessen Kegelritzel durch das Zahnrad mit zwei Zähnen gebildet wird.

**Kurzbeschreibung der Zeichnungen**

Weitere Aspekte und Vorteile der Erfindung ergeben sich außer aus den Ansprüchen auch aus der nachfolgenden Beschreibung zweier bevorzugter Ausführungsbeispiele der Erfindung, welche anhand der Figuren erläutert wird. Dabei zeigen:

Fig. 1 und Fig. 2    eine Zahnradanordnung mit einem erfindungsgemäßen Zahnrad mit zwei Zähnen sowie einem zweiten Zahnrad, welches dieses Zahnrad mit zwei Zähnen antreibt und

Fig. 3      eine zweite Zahnradanordnung, welche sich in der dargestellten Form in einem Planetengetriebe finden kann.

**Detaillierte Beschreibung des Ausführungsbeispiels**

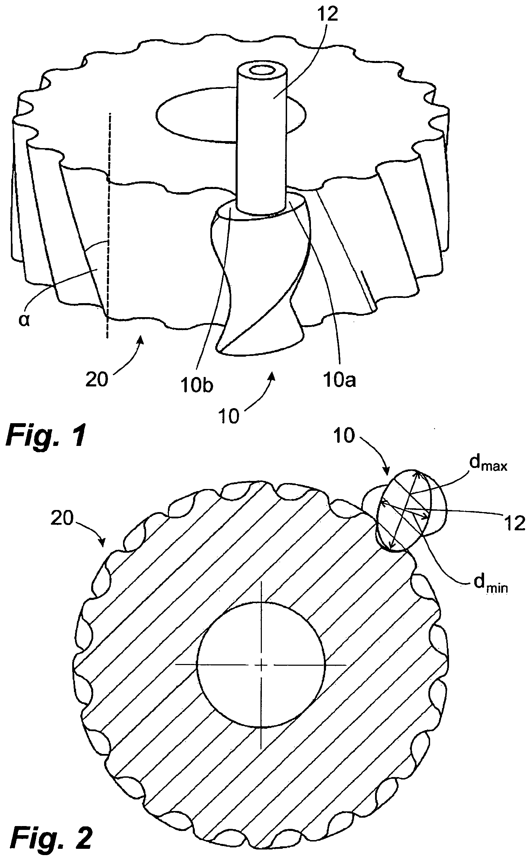

Die Figuren 1 und 2 zeigen in einer geschnittenen Draufsicht und einer perspektivischen Ansicht zwei miteinander kämmende Zahnräder 10, 20. Bei dem Zahnrad 10 handelt es sich um das erfindungsgemäße Zahnrad mit nur zwei Zähnen 10a, 10b. Die Querschnittsfläche dieses Zahnrades weist eine ovale Form auf und ist im Bereich ihres Schwerpunktes durch eine Zahnradachse 12 durchdrungen bzw. wird im Bereich ihres Schwerpunktes von der Zahnradachse 12 orthogonal geschnitten. Weiterhin weist die Querschnittsfläche im Bereich der beiden Zähne 10a, 10b ihre maximale Erstreckung $d_{max}$ durch den geometrischen Schwerpunkt hindurch auf und in Umfangsrichtung gegenüber der Richtung maximaler Erstreckung versetzt ihre minimale Erstreckung $d_{min}$ auf.

Das kleinere Zahnrad 10 sowie das größere Zahnrad 20 sind jeweils schrägverzahnt, wobei der Schrägungswinkel $\alpha$ etwa bei 30° liegt. Im Falle des kleineren Zahnrades 10 beträgt der Überdeckungswinkel der beiden Zähne 10a, 10b jeweils 180°. Hierunter ist zu verstehen, dass sich diese Zähne über die Erstreckung des Zahnrades in Richtung seiner Zahnradachse 12 um 180° helixförmig um die Zahnradachse 12 erstrecken. Durch die Schrägverzahnung der Zahnräder, insbesondere des kleineren Zahnrades 10, wird erreicht, dass dieses stets mit einem Zahn in Eingriff mit dem größeren Zahnrad 20 ist.

Die Querschnittsfläche des kleineren Zahnrades 10 ist in schon genannter Art ellipsenförmig. Hierdurch wird auf die bei Zahnrädern mit zwei Zähnen bislang übliche konkave Verjüngung beidseitig zwischen den Zähnen verzichtet, wodurch eine hohe Stabilität dieses insbesondere unter Last stehenden Zahnrades erreicht wird. Die Ellipsenform ist dabei nicht alternativlos. Beispielsweise könnte die Querschnittsfläche auch die Form einer Superellipse haben. Von Relevanz ist lediglich, dass die Außenkontur der Querschnittsfläche vollständig konvex gestaltet ist, um Schwächungen des Zahnrades durch konkave Außenkonturen zu vermeiden.

Die dargestellte Zahnradpaarung findet vorzugsweise bei der Übertragung mechanischer Leistungen bis 2 kW Verwendung. Während das kleinere Zahnrad 10 vorzugsweise metallisch ist, um trotz seiner nur zwei Zähne einer langfristigen Belastung Stand zu halten, wird beim größeren Zahnrad 20 die Verwendung von Kunststoffwerkstoffen bevorzugt.

Im Falle einer Zahnradpaarung mit nur zwei Zahnrädern, wie sie in den Figuren 1 und 2 dargestellt ist, ist die Schrägverzahnung zwingend.

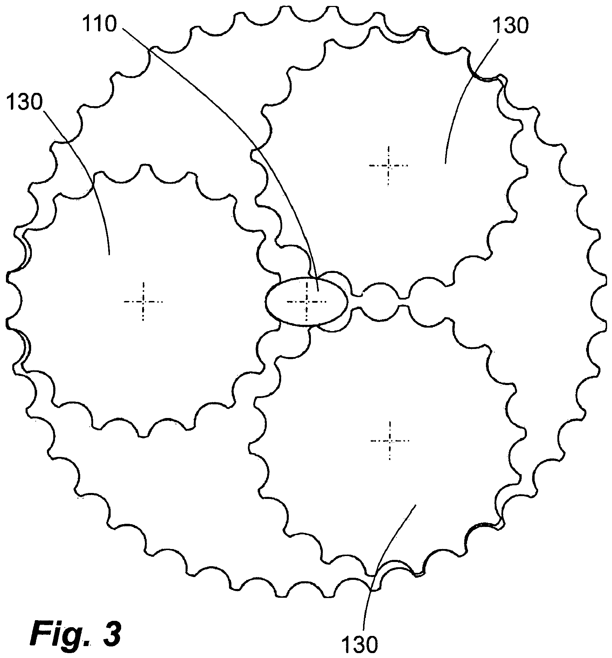

Bei einer Gestaltung wie der der Figur 3, bei der das mit nur zwei Zähnen versehene Zahnrad 110 als Sonnenrad eines Planetengetriebes dient und deshalb mit drei Planetenrädern 130 zumindest phasenweise im Eingriff steht, kann auf eine solche Schrägverzahnung verzichtet werden bzw. der Überdeckungswinkel des Zahnrades 110 reduziert werden.

Figur 3 zeigt eine Gestaltung, bei der keinerlei Schrägverzahnung vorgesehen ist. Das Zahnrad 110 hat somit die Formgebung eines Zylinders mit elliptischer Grundfläche und steht im Wechsel mit jeweils einem der drei Zahnräder 130 im Eingriff.

Statt dass das erfindungsgemäße Zahnrad mit einem außenverzahnten Zahnrad kämmt, ist bei einer nicht dargestellten Variante eine Zahnradpaarung vorgesehen, bei der das mit dem erfindungsgemäßen Zahnrad kämmende Zahnrad als innenverzahntes Hohlrad ausgebildet ist.

**Patentansprüche**

1. Zahnrad (10; 110) mit genau zwei Zähnen (10a, 10b), wobei

    - das Zahnrad (10; 110) um eine Zahnradachse (12) drehbar gelagert ist und
    - in einer Schnittebene, die orthogonal zur Zahnradachse (12) angeordnet ist, eine Querschnittsfläche aufweist,

        - die in ihrem geometrischen Schwerpunkt von der Zahnradachse (12) geschnitten wird und
        - die im Bereich der beiden Zähne (10a, 10b) ihre maximale Erstreckung ($d_{max}$) durch den geometrischen Schwerpunkt hindurch aufweist und in Umfangsrichtung gegenüber der Richtung maximaler Erstreckung versetzt ihre minimale Erstreckung ($d_{min}$) aufweist,

    **dadurch gekennzeichnet, dass**

        - eine Außenkontur der Querschnittsfläche über den gesamten Umfang konvex ausgebildet ist.

**2.** Zahnrad (10) nach Anspruch 1,
**dadurch gekennzeichnet, dass**
das Zahnrad (10) mit einem Überdeckungswinkel von mindestens 180° schrägverzahnt ist.

**3.** Zahnrad (10) nach Anspruch 2,
**dadurch gekennzeichnet, dass**
der Schrägungswinkel ($\alpha$) des Zahnrades (10) mehr als 0° beträgt und 65° oder weniger beträgt.

**4.** Zahnrad (10) nach Anspruch 3,
**dadurch gekennzeichnet, dass**
der Schrägungswinkel ($\alpha$) des Zahnrad (10) 15° oder mehr beträgt und 50° oder weniger beträgt.

**5.** Zahnrad (10;110) nach einem der vorstehenden Ansprüche,
**dadurch gekennzeichnet, dass**
die maximale Erstreckung ($d_{max}$) zwischen Faktor 1,25 und Faktor 2,25 größer ist als die minimale Erstreckung ($d_{min}$).

**6.** Zahnrad (10) nach einem der vorstehenden Ansprüche,
**dadurch gekennzeichnet, dass**
die maximale Erstreckung ($d_{max}$) der Querschnittsfläche um 90° gegenüber der minimalen Erstreckung ($d_{min}$) versetzt ist.

**7.** Zahnrad (10; 110) nach einem der vorstehenden Ansprüche,
**dadurch gekennzeichnet, dass**
die Außenkontur der Querschnittsfläche die Form einer Ellipse aufweist.

**8.** Zahnrad (10) nach einem der vorstehenden Ansprüche,
**dadurch gekennzeichnet, dass**
die Überdeckung der Zähne (10a, 10b) zwischen größer / gleich 180° und kleiner als 360° ist.

**9.** Zahnradanordnung mit mindestens zwei in kämmendem Eingriff befindlichen Zahnrädern (110, 130),
**dadurch gekennzeichnet, dass**
das kleinere oder kleinste der Zahnräder (110, 130) nach einem der vorstehenden Ansprüchen ausgebildet ist.

**10.** Zahnradanordnung nach Anspruch 9,
**dadurch gekennzeichnet, dass**
das größere Zahnrad (130) oder die größeren Zahnräder (130) eine Zahnzahl von zehn oder mehr Zähnen aufweist.

**11.** Zahnradanordnung nach Anspruch 9 oder 10,
**dadurch gekennzeichnet, dass**
mindestens zwei größere Zahnräder (130) vorgesehen sind, die jeweils mit dem kleineren Zahnrad (110) kämmen.

**12.** Zahnradanordnung nach einem der Ansprüche 9 bis 11,
**dadurch gekennzeichnet, dass**
das kleinere der Zahnräder (110) aus Metall und das größere der Zahnräder (130) aus Kunststoff gefertigt ist.

**13.** Getriebe mit einer Zahnradanordnung,
**dadurch gekennzeichnet, dass**
die Zahnradanordnung nach einem der Ansprüche 9 bis 12 ausgebildet ist.

**14.** Getriebe nach Anspruch 13,
**dadurch gekennzeichnet, dass**
das Getriebe ein Planetengetriebe ist, dessen Sonnenrad (110) durch das kleinere oder kleinste der Zahnräder gebildet wird.

**15.** Getriebe nach Anspruch 13,
**dadurch gekennzeichnet, dass**
das Getriebe ein Kegelradgetriebe ist, dessen Kegelritzel durch das kleinere oder kleinste der Zahnräder gebildet wird.

**Claims**

1. A gear wheel (10; 110) comprising precisely two teeth (10a, 10b), wherein

   - the gear wheel (10; 110) is mounted rotatably about a gear wheel axis (12) and
   - in a sectional plane, which is arranged orthogonally to the gear wheel axis (12), has a cross-sectional surface,

      - which is intersected in its geometric center by the gear wheel axis (12), and
      - which has in the region of both teeth (10a, 10b) its maximum extension ($d_{max}$) through the geometric center and which, offset in the circumferential direction with respect to the direction of maximum extension, has its minimum extension ($d_{min}$),

   **characterized in that**
   - an outer contour of the cross-sectional surface is formed convexly over the entire circumference.

2. The gear wheel (10) according to claim 1, **characterized in that** the gear wheel (10) is helically geared with an overlap angle of at least 180°.

3. The gear wheel (10) according to claim 2, **characterized in that** the helical angle ($\alpha$) of the gear wheel (10) is greater than 0° and is 65° or less.

4. The gear wheel (10) according to claim 3, **characterized in that** the helical angle ($\alpha$) of the gear wheel (10) is 15° or more and is 50° or less.

5. The gear wheel (10; 110) according to any one of the preceding claims, **characterized in that** the maximum extension ($d_{max}$) is between a factor of 1.25 and a factor of 2.25 greater than the minimum extension ($d_{min}$).

6. The gear wheel (10) according to any one of the preceding claims, **characterized in that** the maximum extension ($d_{max}$) of the cross-sectional surface is offset by 90° with respect to the minimum extension ($d_{min}$).

7. The gear wheel (10; 110) according to any one of the preceding claims, **characterized in that** the outer contour of the cross-sectional surface has the form of an ellipse.

8. The gear wheel (10) according to any one of the preceding claims, **characterized in that** the overlap of the teeth (10a, 10b) is between greater than / equal to 180° and less than 360°.

9. A gear wheel arrangement comprising at least two gear wheels (110, 130) in cogging engagement, **characterized in that** the smaller or the smallest of the gear wheels (110, 130) is formed according to any one of the preceding claims.

10. The gear wheel arrangement according to claim 9, **characterized in that** the larger gear wheel (130) or the larger gear wheels (130) has/have a number of teeth of ten or more teeth.

11. The gear wheel arrangement according to claim 9 or 10, **characterized in that** at least two larger gear wheels (130) are provided which cog in each case with the smaller gear wheel (110).

12. The gear wheel arrangement according to any of claims 9 to 11, **characterized in that** the smaller of the gear wheels (110) is manufactured from metal and the larger of the gear wheels (130) is manufactured from plastic.

13. A transmission with a gear wheel arrangement, **characterized in that** the gear wheel arrangement is configured according to any of claims 9 to 12.

14. The transmission according to claim 13, **characterized in that** the transmission is a planetary transmission, the sun wheel (110) of which is the smaller or the smallest of the gear wheels.

15. The transmission according to claim 13, **characterized in that** the transmission is a bevel wheel transmission, the bevel pinion of which is the smaller or the smallest of the gear wheels.

**Revendications**

1. Roue dentée (10 ; 110) comprenant exactement deux dents (10a, 10b),

    - la roue dentée (10 ; 110) étant supportée de manière à pouvoir tourner autour d'un axe de roue dentée (12) et
    - présentant, dans un plan de coupe disposé perpendiculairement à l'axe de roue dentée (12), une surface en section transversale

        - qui est intersectée par l'axe de la roue dentée (12) au niveau de son centre de gravité géométrique et
        - qui présente, dans la région des deux dents (10a, 10b), son étendue maximale ($d_{max}$) à travers le centre de gravité géométrique et qui présente son étendue minimale ($d_{min}$) de manière décalée dans la direction périphérique par rapport à la direction d'étendue maximale,

    **caractérisée en ce**
    - **qu'**un contour extérieur de la surface en section transversale est réalisé sous forme convexe sur toute la périphérie.

2. Roue dentée (10) selon la revendication 1,
    **caractérisée en ce que**
    la roue dentée (10) présente une denture oblique avec un angle de recouvrement d'au moins 180°.

3. Roue dentée (10) selon la revendication 2,
    **caractérisée en ce que**
    l'angle d'oblicité ($\alpha$) de la roue dentée (10) est supérieur à 0° et inférieur ou égal à 65°.

4. Roue dentée (10) selon la revendication 3,
    **caractérisée en ce que**
    l'angle d'oblicité ($\alpha$) de la roue dentée (10) est supérieur ou égal à 15° et inférieur ou égal à 50°.

5. Roue dentée (10 ; 110) selon l'une quelconque des revendications précédentes,
    **caractérisée en ce que**
    l'étendue maximale ($d_{max}$) est supérieure d'un facteur compris entre 1,25 et 2,25 à l'étendue minimale ($d_{min}$).

6. Roue dentée (10) selon l'une quelconque des revendications précédentes,
    **caractérisée en ce que**
    l'étendue maximale ($d_{max}$) de la surface en section transversale est décalée de 90° par rapport à l'étendue minimale ($d_{min}$).

7. Roue dentée (10 ; 110) selon l'une quelconque des revendications précédentes,
    **caractérisée en ce que**
    le contour extérieur de la surface en section transversale présente la forme d'une ellipse.

8. Roue dentée (10) selon l'une quelconque des revendications précédentes,
    **caractérisée en ce que**
    le recouvrement des dents (10a, 10b) est compris entre supérieur ou égal à 180° et inférieur à 360°.

9. Agencement de roues dentées comprenant au moins deux roues dentées (110, 130) en prise d'engrènement,
    **caractérisé en ce que**
    la moindre ou la plus petite des roues dentées (110, 130) est réalisée selon l'une quelconque des revendications précédentes.

10. Agencement de roues dentées selon la revendication 9,
    **caractérisé en ce que**
    la plus grande roue dentée (130) ou les plus grandes roues dentées (130) présentent un nombre de dents de 10 ou plus.

11. Agencement de roues dentées selon la revendication 9 ou 10,
    **caractérisé en ce**

**qu'**au moins deux roues dentées plus grandes (130) sont prévues, lesquelles s'engrènent avec la roue dentée plus petite (110).

12. Agencement de roues dentées selon l'une quelconque des revendications 9 à 11,
    **caractérisé en ce que**
    la plus petite des roues dentées (110) est fabriquée en métal et la plus grande des roues dentées (130) est fabriquée en plastique.

13. Transmission comprenant un agencement de roues dentées,
    **caractérisée en ce que**
    l'agencement de roues dentées est réalisé selon l'une quelconque des revendications 9 à 12.

14. Transmission selon la revendication 13,
    **caractérisée en ce que**
    la transmission est une transmission planétaire dont la roue solaire (110) est formée par la moindre ou la plus petite des roues dentées.

15. Transmission selon la revendication 13,
    **caractérisée en ce que**
    la transmission est une transmission à pignon conique dont le pignon conique est formé par la moindre ou la plus petite des roues dentées.

**Fig. 1**

**Fig. 2**

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202006011877 U1
- EP 2177788 A1